Europäisches Patentamt

European Patent Office

Office européen des brevets

(19)

(11) Numéro de publication: **0 032 475**
**B1**

(12) FASCICULE DE BREVET EUROPEEN

(45) Date de publication du fascicule du brevet:
04.05.83

(51) Int. Cl.³: **G 02 C 5/12**

(21) Numéro de dépôt: 81420001.0

(22) Date de dépôt: 06.01.81

(54) **Monture de lunettes munie de plaquettes nasales.**

(30) Priorité: 10.01.80 FR 8000864

(43) Date de publication de la demande:
22.07.81 Bulletin 81/29

(45) Mention de la délivrance du brevet:
04.05.83 Bulletin 83/18

(84) Etats contractants désignés:
DE GB IT

(56) Documents cités:
**FR-A-1 044 484**
**FR-A-1 264 925**

(73) Titulaire: **Morel, Michel, No 33 La Madône,
F-39400 Morbier (FR)**

(72) Inventeur: **Morel, Michel, No 33 La Madône,
F-39400 Morbier (FR)**

(74) Mandataire: **Monnier, Guy et al, Cabinet
Monnier 142-150 Cours Lafayette, F-69003 Lyon (FR)**

BUNDESDRUCKEREI BERLIN

Monture de lunettes munie de plaquettes nasales

La présente invention a trait aux montures de lunettes et elle concerne plus particulièrement le montage des plaquettes nasales destinées à former appuis sur le nez de l'usager.

On sait que dans les montures classiques chacune de ces plaquettes est fixée, le plus souvent avec une certaine liberté angulaire, en bout d'un bras-support convenablement rendu solidaire de la partie intérieure du cercle porte-verre correspondant. Il est bien entendu nécessaire d'adapter la position des plaquettes à la morphologie nasale particulière de l'usager et à cet effet, lors de la livraison des lunettes, l'opticien doit déformer de façon plus ou moins accentuée les bras porte-plaquette; si le déplacement dans le sens horizontal (écartement ou rapprochement, avant ou arrière) est aisé, il n'en va pas de même pour les déplacements dans le sens vertical. Aussi en pratique le positionnement vertical de la monture sur le visage de l'usager est-il effectué de manière très approximative, ce qui nuit évidemment à la correction optique, notamment dans le cas de verres à double foyer ou à correction progressive, ainsi qu'au confort de l'usager. De plus il arrive qu'en dépit des précautions prises le bras porte-plaquette se rompe au niveau de sa fixation au cercle porte-verre lors du réglage de la plaquette correspondante.

L'on a bien imaginé des agencements permettant le réglage de la position verticale des plaquettes moyennant déplacement de celles-ci le long de leur bras-support, mais les constructions proposées se sont révélées compliquées et coûteuses en même temps qu'elles affectaient de manière très défavorable l'aspect de la monture.

C'est à ces inconvénients qu'entend remédier la présente invention. Conformément à celle-ci chaque plaquette est portée par une pince en forme de chariot, mobile le long de deux portions parallèles obtenues par repliage en épingle à cheveux de l'extrémité du bras porte-plaquette, un mécanisme de serrage étant associé audit chariot ou pince de façon à l'immobiliser axialement à la position désirée pour la plaquette.

D'autres caractéristiques remarquables de l'invention ressortiront de la description qui va suivre en référence au dessin annexé, lequel dessin, donné à titre d'exemple, permettra de mieux comprendre l'invention, les caractéristiques qu'elle présente et les avantages qu'elle est susceptible de procurer:

Fig. 1 est une vue schématique en perspective illustrant le montage d'une plaquette nasale conformément à l'invention.

Fig. 2 est une coupe transversale de la plaquette considérée, l'ensemble des pièces ayant été représenté à une échelle agrandie.

Fig. 3 est la coupe suivant le plan indiqué en III-III (fig. 2); on a rappelé en II-II le plan de coupe de fig. 2.

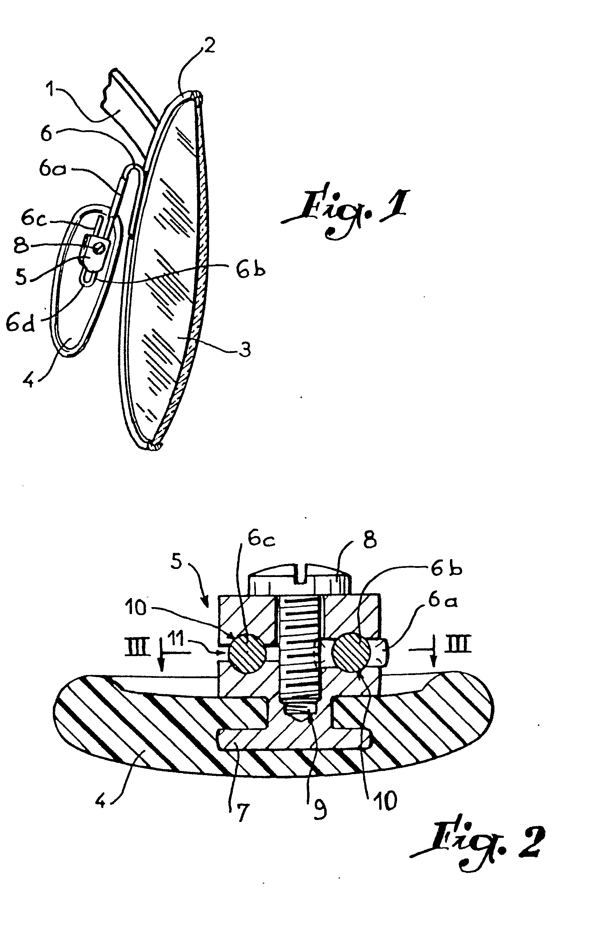

En fig. 1 la référence 1 désigne le pont usuel d'une monture reliant l'un à l'autre les deux cercles 2 destinés à la retenue des verres 3. La plaquette nasale représentée en 4 est solidaire d'un chariot 5 susceptible d'être déplacé, puis immobilisé, le long d'un bras porte-plaquette 6 dont l'extrémité opposée est rendue solidaire, par exemple par soudure, du bord intérieur du cercle 2 considéré.

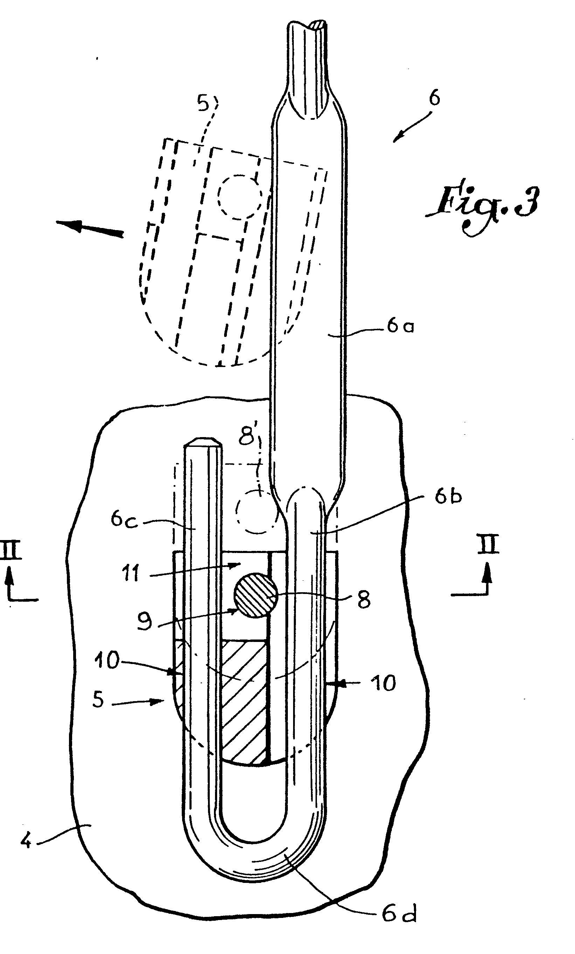

Dans l'exemple de mise en oeuvre envisagé en fig. 2 et 3, on a supposé que la plaquette 4, en matière synthétiques souple, était fixée au chariot 5 par le moyen d'un insert 7 solidaire dudit chariot. Ce dernier est formé par un dé métallique fendu axialement de façon à constituer une pince déformable susceptible d'être serrée à l'aide d'une vis transversale 8 engagée à l'intérieur d'un taraudage 9. Le chariot est creusé de deux alésages 10 dont chacun est ménagé dans l'une et l'autre parties du chariot séparées par la fente 11 prévue dans celui-ci pour permettre sa déformation.

Le bras porte-plaquette 6 comporte, sur sa partie libre orientée de manière substantiellement verticale, une portion aplatie 6a suivie d'une extrémité repliée à 180° à la manière d'une épingle à cheveux, laquelle détermine sinsi deux portions rectilignes parallèles 6b et 6c à section circulaire, réunies l'une à l'autre par une boucle 6d, comme montré en fig. 3. Les deux portions 6b et 6c sont introduites à l'intérieur des alésages 10 du chariot 5, si bien que ce dernier peut coulisser axialement le long desdites portions. Le serrage de la vis 8 assure le rapprochement à force des deux parties du chariot 5 en provoquant l'immobilisation de celui-ci à la position choisie.

Il doit être noté que l'alésage 10 qui est destiné à former logement pour la portion 6b du bras 6 se prolonge latéralement vers l'intérieur du chariot 5 pour recevoir la portion aplatie 6a et permettre ainsi l'engagement initial dudit chariot sur les portions 6b et 6c par simple coulissement. Par ailleurs l'axe du taraudage 9 et de l'alésage ménagé en correspondance dans l'autre partie du chariot pour le passage de la vis 8, est situé de façon telle qu'une fois ladite vis mise en place le coulissement du chariot vers le haut amène cette vis à buter contre la base de la portion aplatie 6a, comme le montre la référence 8' en tracé interrompu de fig. 3.

Dans ces conditions on conçoit que pour la mise en place, sur le bras 6, du chariot 5 équipé de sa plaquette 4, il est indispensable que la vis soit ôtée. Une fois cette vis mise en place, le chariot précité est retenu sur le bras 6 et ne peut se séparer de celui-ci, même dans le cas où au cours de l'utilisation de la monture la vis susmentionnée viendrait à se desserrer: l'extraction du chariot hors du bras nécessite obligatoirement le retrait de la vis.

On comprend pour le reste l'utilisation du système de montage suivant l'invention; lors de la livraison de la monture, l'opticien peut régler de manière parfaitement précise la position en hauteur de chaque plaquette 4 par rapport au pont 1, si bien que la monture considérée est ainsi susceptible d'être étroitement adaptée à la morphologie de l'usager. Bien entendu les bras 6 se prêtent au réglage du positionnement des plaquettes à l'horizontale, comme dans une monture classique. Il convient de remarquer que le réglage des chariots 5 le long des bras 6 peut être effectué alors que les verres sont montés à l'intérieur des cercles 2.

Dans l'exemple de réalisation sus- exposé on a supposé que chaque plaquette 4 était rigidement solidaire du chariot 5 correspondant, ce qui oblige en pratique à réaliser la plaquette en une matière synthétique souple, propre à s'adapter à la paroi nasale. Toutefois on peut très bien fixer une plaquette rigide sur le chariot 5 en adoptant un système de montage laissant une certaine liberté angulaire à ladite plaquette, comme dans les montures usuelles.

Il doit d'ailleurs être entendu que la description qui précède n'a été donnée qu'à titre d'exemple, et qu'elle ne limite nullement le domaine de l'invention dont on ne sortirait pas en remplaçant les détails d'exécution décrits par tous autres équivalents. On conçoit en particulier qu'en certains cas les bras porte-plaquette 6, susceptibles de présenter tout profil désiré, peuvent être fixés non plus en un point quelconque des cercles porte-verre 2, mais contre le pont 1 moyennant une conformation appropriée de leur partie supérieure.

## Revendications

1. Monture de lunettes, du genre dans lequel chacune des plaquettes nasales destinées à former appuis contre le nez de l'usager est associée à des moyens qui permettent son réglage en hauteur par rapport à la monture, caractérisée en ce que chaque plaquette (4) est portée par une pince (5) mobile à la manière d'un chariot le long de portions rectilignes (6b et 6c) prévues à l'extrémité, repliée (6d) en forme d'épingle à cheveux, du bras porte-plaquette (6) solidaire de la monture, un mécanisme de serrage (8—9) assurant l'immobilisation axiale dudit chariot ou pince à la position exacte désirée.

2. Monture suivant la revendication 1, caractérisée en ce que l'extrémité repliée en forme d'épingle à cheveux est précédée par une partie à section aplatie (6a) qui permet l'engagement du chariot ou pince (5) par simple coulissement.

3. Monture suivant l'une quelconque des revendications 1 et 2, caractérisée en ce que le mécanisme de serrage est constitué, à la façon en soi connue, par une vis transversale (8).

4. Monture suivant les revendications 2 et 3 envisagées en combinaison, caractérisée en ce que la vis de serrage (8) est disposée de façon à venir buter contre la partie aplatie (6a) du bras porte-plaquette (6), de telle sorte que la mise en place et le retrait du chariot ou pince (5) impliquent l'élimination préalable de ladite vis.

## Patentansprüche

1. Brillengestell der Art, bei der jede der zur Abstützung gegen die Nase des Trägers bestimmten Nasenplatten mit Mitteln versehen ist, die ihre Höheneinstellung im Vergleich zum Gestell ermöglichen, dadurch gekennzeichnet, daß jede Platte (4) von einer Klaue (5) getragen wird, die in der Art eines Schlittens längs geradlinigen Teilen (6b und 6c) beweglich ist, die am in Form einer Haarklammer gebogenen Ende (6d) des am Gestell angebrachten Bügels (6) vorgesehen sind, wobei eine Spannvorrichtung (8—9) die axiale Unverschiebbarkeit des besagten Schlittens oder der besagten Klaue in genau der gewünschten Lage sicherstellt.

2. Gestell nach Anspruch 1, dadurch gekennzeichnet, daß dem in Form einer Haarklammer gebogenen Ende ein Teil mit einem abgeflachten Abschnitt (6a) vorausgeht, der die Einstellung des Schlittens oder der Klaue (5) durch einfaches Verschieben erlaubt.

3. Gestell nach einem der Ansprüche 1 und 2, dadurch gekennzeichnet, daß die Spannvorrichtung in an sich bekannter Weise aus einer Querschraube (8) besteht.

4. Gestell nach den in Kombination betrachteten Ansprüchen 2 und 3, dadurch gekennzeichnet, daß die Spannschraube (8) so angeordnet ist, daß sie gegen den abgeflachten Teil (6a) des Bügels (6) zu stoßen kommt, derart, daß das Einsetzen oder Abnehmen des Schlittens oder der Klaue (5) die vorherige Entfernung der besagten Schraube erfordert.

## Claims

1. A spectacle frame of the type in which each of the nasal pads intended to form a support against the nose of the wearer is associated with means which permit its adjustment in height with respect to the frame, characterised in that, each pad (4) is carried by a clamp (5) movable in the manner of a slide along rectilinear portions (6b and 6c) provided at the end of the pad support arm (6) integral with the frame and bent into the shape of a hairpin, a locking mechanism (8—9) ensuring axial fixing of the said slide or clamp in the exact desired positon.

2. A frame according to claim 1, characterised in that, the end bent into the shape of a hairpin is preceded by a portion of flat section (6a) which permits engagement of the slide or clamp (5) by a simple sliding movement.

3. A frame according to any one of claims 1 and 2, characterised in that, the locking mechanism is constituted, in a manner known per se, by a transverse screw (8).

4. A frame according to claims 2 and 3 taken in combination, characterised in that, the locking screw (8) is arranged so as to abut against the flat portion (6a) of the pad support arm (6) in such a way that the setting up and withdrawal of the slide or clamp (5) involves previous removal of the said screw.

*Fig. 1*

*Fig. 2*

Fig.3